# EUROPÄISCHE PATENTSCHRIFT

(11) **EP 2 499 904 B1**
(45) Veröffentlichungstag und Bekanntmachung des Hinweises auf die Patenterteilung: **16.03.2016**
(21) Anmeldenummer: 12159861.9
(22) Anmeldetag: 16.03.2012
(51) Int. Cl.: A01G 25/09, B65H 75/38, F16L 11/12, F16L 53/00

(54) **SCHLAUCHTROMMELANORDNUNG MIT HEIZMITTEL IM SCHLAUCH**
HOSE DRUM ASSEMBLY WITH HEATING MEANS IN THE HOSE
AGENCEMENT DE TAMBOUR POUR TUYAU AVEC MOYEN DE CHAUFFAGE DANS LE TUYAU

(30) Priorität: 18.03.2011 DE 102011014520
(43) Veröffentlichungstag der Anmeldung: 19.09.2012
(73) Patentinhaber: Stemmann-Technik GmbH, 48465 Schüttorf (DE)
(72) Erfinder: Bünker, Ludger, 48488 Emsbüren (DE)
(74) Vertreter: Griepenstroh, Jörg

(56) Entgegenhaltungen:
- EP-A2- 1 329 660
- DE-C1- 19 504 873
- US-A- 5 568 824
- US-A1- 2010 200 559

## Beschreibung

Die Erfindung betrifft eine Schlauchtrommelanordnung gemäß den Merkmalen des Patentanspruchs 1 sowie ein Verfahren zum Betreiben einer Schlauchtrommelanordnung gemäß Patentanspruch 7.

Schlauchtrommeln dienen dem geordneten Auf- und Abwickeln von Schläuchen. Sie werden eingesetzt, um fluide Medien zwischen einem ortsveränderlichen Verbraucher und einem ortsfesten Einspeisepunkt zu gewährleisten. Hierbei ist die Schlauchtrommel üblicherweise auf dem beweglichen Verbraucher montiert. Zu dem Einspeisepunkt hin wickelt die Schlauchtrommel auf, von dem Einspeisepunkt weg wickelt die Trommel ab. Ein Ende eines aufzutrommelnden Schlauchs wird also am Schlauchfestpunkt auf der so genannten Landseite und ein anderes Ende an einer Hohlwelle der Schlauchtrommel angeschlossen. Man unterscheidet in der Auftrommlung der Schlauchtrommeln zwischen zylindrischer und spiraliger Ausführungsform. Unabhängig von der Bauform sind Schlauchtrommeln bei Minusgraden nur bedingt einzusetzen, weil die Gefahr besteht, dass Wasser im Schlauch gefriert, wenn der Fluidstrom unterbrochen wird. Theoretisch könnte man den Schlauch von außen erwärmen, was aber bei einem aufgewickelten Schlauch über die gesamte Lange im Wesentlichen gleichzeitig erfolgen müsste, damit der Schlauch beim Abwickeln nicht beschädigt wird. Praktisch ist das nur möglich, wenn die gesamte Schlauchtrommel in einen aufgewärmten Raum gebracht wird. Das lässt sich aber nicht immer realisieren.

Aus der US 5,568,824 A ist eine Schlauchtrommelanordnung bekannt, bei welcher ein Trommelkörper um seine Trommelachse drehbar gelagert und dafür vorgesehen ist, einen Schlauch wickelnd aufzunehmen. Die Trommelachse ist als Fluidleitung ausgebildet, an welche der aufzuwickelnde Schlauch angeschlossen ist und welche mit einer Drehdurchführung versehen ist, welche die drehbare Trommelachse mit einer nicht drehbaren Zuleitung verbindet. Die Schlauchtrommelanordnung ist innerhalb eines unterirdischen Gehäuses angeordnet, um sie vor Urrmgebungseinflüssen zu schützen. Um die Schlauchtrommelanordnung vor Frost zu schützen, kann eine Heizung angeschaltet werden, um den Innenraum des Gehäuses zu beheizen. Diese Lösung ist vergleichsweise aufwendig, da die Schlauchtrommel bei Minusgraden selbst nur innerhalb des beheizbaren Raums angeordnet sein kann. Nicht immer lassen es die örtlichen Gegebenheiten zu, Schlauchtrommeln, in beheizten Räumen unterzubringen, insbesondere wenn die Schlauchtrommeln sehr groß dimensioniert sind.

Femer ist zum Stand der Technik die EP 1 329 660 A2 zu benennen, die einen flexiblen, mehrschichtigen, beheizbaren Schlauch für die Durchleitung von Flüssigkeiten besitzt. Der Schlauch ist flexibel und der Heizleiter wendelförmig in den Mantel des Schlauchs eingebettet. Der elektrische Leiter soll durch eine Ummantelung geschützt werden, um eine elektrische Isolierung zu gewährleisten, so dass es zu keiner Beeinträchtigung der metallischen Seele durch Korrosion oder Kurzschluss in Folge eindringender Feuchtigkeit kommen kann. Ein solcher Schlauch kommt insbesondere als flexibler, beheizbarer Druckschlauch für Kraftfahrzeuge zum Einsatz. Bei dieser Art der Verwendung sind die Enden des Schlauches ortsfest, so dass der elektrische Weizleiter ebenfalls über ortsfeste Anschlüsse mit einer zum Betreiben des Heizleiters erforderlichen Spannungsquelle verbunden werden kann.

Bei einer Schlauchtrommel ist jedoch in der Regel mindestens ein Ende des Schlauches verlagerbar, sei es, weil es sich mit der Schlauchtrommel dreht oder weil bei ortsfester Schlauchtrommel auch das andere Ende des Schlauches verlagert wird.

Der Erfindung liegt die Aufgabe zugrunde, eine Schlauchtrommelanordnung aufzuzeigen, die auch bei kalter Witterung eingesetzt werden kann, ohne die gesamte Schlauchtrommelanordnung von außen aufzuwärmen.

Der Erfindung liegt zudem die Aufgabe zugrunde, ein Verfahren zum frostsicheren Betreiben einer Schlauchtrommelanordnung aufzuzeigen.

Der gegenständliche Teil der Aufgabe wird durch eine Schlauchtrommelanordnung gemäß den Merkmalen des Patentanspruchs 1 gelöst.

Die erfindungsgemäße Schlauchtrommelanordnung weist die folgenden Merkmale auf:
- Ein Trommelkörper ist um seine Trommelachse drehbar gelagert und ist dafür vorgesehen, einen Schlauch wickelnd aufzunehmen;
- Die Trommelachse ist als Fluidleitung ausgebildet, an welche der aufzuwickelnde Schlauch angeschlossen ist und welche mit einer Drehdurchführung versehen ist, welche die drehbare Trommelachse mit einer nicht drehbaren Zuleitung verbindet;
- In dem wickelnd aufzunehmenden Schlauch ist ein elektrisches Heizmittel angeordnet,
- Zwischen der Drehdurchführung und dem Trommelkörper ist eine Schleifringanordnung angeordnet, mittels welcher elektrische Energie in das Heizmittel einspeisbar ist.

Der Kern der Erfindung ist, dass der Schlauch nicht von außen, sondern von innen erwärmt wird, indem in den Schlauch ein elektrisches Heizmittel angeordnet ist. Das elektrische Heizmittel muss mit Energie versorgt werden, was mittels einer Schleifringanordnung erfolgt. Die Energieversorgung mittels Schleifringanordnung ist deswegen von Vorteil, weil der Schlauch aufgrund seiner wickelnden Anordnung um die Trommelachse rotiert und dennoch in jeder Position der Trommelachse eine Energieeinspeisüng möglich sein muss. Dies lässt sich besonders effektiv durch eine Schleifringanordnung realisieren. Eine solche Schleifringanordnung lässt sich sogar nachrüsten, indem zwischen der ohnehin vorhandenen Drehdurchführung, die in der Regel mit der Trommelachse verschraubt ist, und der Trommelachse ein Modul eingebaut wird, in welchem sich die Schleifringanordnung befindet. Derartig ausgestaltete Schlauchtrommelanordnungen lassen sich ohne weiteres bei Minustemperaturen betreiben, ohne dass die Gefahr besteht, dass der Schlauch auch bei unterbrochenem Fluidstrom einfriert. Es ist auch nicht erforderlich, die gesamte Schlauchtrommelanordnung in einen aufgewärmten Raum zu verbringen, was praktisch ohnehin nur in den seltensten Fällen möglich ist. Die gesamte Schlauchtrommelanordnung ist durch die erfindungsgemäße Ausgestaltung frostsicher ausgebildet.

Bei der erfindungsgemäßen Schlauchtrommel handelt es sich insbesondere um eine Motorschlauchtrommel.

Für das Aufwickeln und das Abwickeln des Schlauchs ist bevorzugt eine Antriebseinheit mit einem Motor und einem Getriebe vorgesehen. Das Abwickeln des Schlauchs erfolgt entgegen der eigentlichen Drehrichtung des Motors. Eine im Motor eingebaute Haltebremse verhindert das Ablaufen des Schlauchs bei ausgeschaltetem Motor.

An der Schlauchtrommelanordnung ist an der Trommelachse die Drehdurchführung angeordnet. Die Drehdurchführung verbindet den drehbaren Teil der Schlauchtrommel über ein Rohrdrehgelenk mit dem feststehenden Einspeisepunkt.

Die Schleifringanordnung, über welche elektrische Energie in das Heizmittel eingespeist wird, umfasst ortsfeste Kohlebürsten, die den elektrischen Kontakt zu den Schleifringen am rotierenden Teil der Schlauchtrommel herstellen.

Die Erfindung stellt besondere Anforderungen an die Ausgestaltung des Heizmittels. Das Heizmittel muss flexibel sein, um sich an die Bewegung des Schlauches anzupassen. Als besonders vorteilhaft wird es daher angesehen, wenn das Heizmittel wendelförmig innerhalb des Schlauches angeordnet ist. Dadurch besitzt das Heizmittel genug Bewegungsreserven, ohne dass es beim Auf- oder Abwickeln zu stark gespannt wird. Die schrauben- oder helixförmige Struktur eines Heizmittels ermöglicht neben einem unproblematischen Ein- und Abrollen des Schlauchs auch ein kurzzeitiges Einknicken des Schlauches durch eventuell im Betrieb entstandene plötzliche Bewegungen. Je kleiner die Steigung des wendelförmigen Heizmittels ist, desto größer ist der Energieeintrag je Längeneinheit des Schlauches. Das Heizmittel ist daher vorzugsweise länger als der Schlauchabschnitt, der aufgeheizt werden soll.

Vorzugsweise ist das Heizmittel innerhalb des Schlauches mit einem Zugseil gekoppelt. Das Zugseil soll einerseits verhindern, dass das Heizmittel durch die Strömung innerhalb des Schlauches stromabwärts verlagert wird. Über das Zugseil werden auch der Rücklauf und ein Schutzleiter gehalten, die gemeinsam in einem Kabel angeordnet sind.

Das elektrische Heizmittel ist über einen Durchgang neben der Schleifringanordnung in den Schlauch geführt. Der Durchgang ist durch eine dichte Verschraubung geschlossen. Das Zugseil wird an einem Widerlager gesichert, z. B. an einem Bolzen, der in die Hohlwelle ragt, insbesondere in diese eingeschweißt ist.

Die Schleifringanordnung ist vorteilhaft witterungsgeschützt in einem Gehäuse angeordnet.

In einer vorteilhaften Ausführungsform der Erfindung ist innerhalb des Schlauchs eine Temperaturmesseinrichtung angeordnet. Bevorzugt handelt es sich hierbei um einen Kaltleiter. Besonders bevorzugt kommt hier ein PT100 zum Einsatz. Der PT100 kann die Temperatur in einem Bereich von ca. - 200 °C bis + 850 °C messen. Ein besonderer Vorteil, welcher der PT100 mit sich bringt, ist, dass er sehr einfach montierbar ist und sowohl mit aber auch ohne Ummantelung direkt an oder in dem Schlauch verbaut werden kann.

Ebenso ist es denkbar, die Temperaturmesseinrichtung an dem Rohrdrehgelenk anzuordnen. Maßgeblich ist die- Erfassung der Temperatur in dem Schlauch. Über die Datenleitung wird ein Messsignal der Temperaturmesseinrichtung einer Auswerteeinheit zugeleitet.

In einer weiteren bevorzugten Variante der Erfindung ist außerhalb des Schlauchs eine weitere Temperaturmesseinrichtung angeordnet, welche ebenfalls mit der Auswerteeinheit verbunden ist. Hierbei handelt es sich bevorzugt um einen an der Außenseite des Schlauchs angebrachten Temperaturfühler. Der Temperaturfühler misst die Umgebungstemperatur des Schlauchs.

In einer weiteren vorteilhaften Ausführungsform der Erfindung ist die Auswerteeinheit mit einer Steuereinheit verbunden. Die Steuereinheit ist dafür vorgesehen, bei Unterschreiten einer unteren Temperatur im Schlauch und/oder der Umgebungstemperatur, die Einspeisung elektrischer Energie in die Heizmittel freizugeben und bei Überschreiten einer oberen Temperatur die Einspeisung zu beenden. Hierdurch kann ein Gefrieren des transportierten Mediums wirksam verhindert werden und gezielt eine bestimmte Medientemperatur gewährleistet werden.

Der verfahrensmäßige Teil der Aufgabe wird durch die Merkmale des Patentanspruchs 7 gelöst.

Hinsichtlich des Aufbaus und der Funktion der erfindungsgemäßen Schlauchtrommelanordnung wird auf die vorstehenden Ausführungen verwiesen. Das erfindungsgemäße Verfahren zum Betreiben einer solchen Schlauchtrommelanordnung zeichnet sich dadurch aus, dass ein elektrisches Heizmittel angeschaltet wird, wenn die Temperaturmesseinrichtung im Schlauch das Unterschreiten einer unteren Temperatur misst. Durch diese Frostwächterfunktion wird die permanente Betriebsicherheit der Schlauchtrommelanordnung gewährleistet.

In vorteilhafter Weiterbildung wird das Abschalten des Heizmittels durch eine Steuereinheit gewährleistet, sobald eine obere Temperatur im Schlauch überschritten wird.

In vorteilhafter Weiterbildung wird das in der Schlauchtrommelanordnung angeordnete Heizmittel so angesteuert, dass es in Abhängigkeit von der Temperatur innerhalb und außerhalb des Schlauchs ein- und ausgeschaltet wird.

Durch die beschriebene Mess- und Steuertechnik in Form von innerhalb und außerhalb des Schlauchs angeordneten Temperaturmesseinrichtungen und der damit verbundenen Auswerteeinheit sowie der Steuereinheit wird frühzeitig einem Gefrieren des transportierten Fluides entgegengewirkt.

Die Erfindung wird nachfolgend anhand der in den Figuren gezeigter Ausführungsbeispiele näher beschrieben. Es zeigen:
- Figur 1: eine erfindungsgemäße Schlauchtrommelanordnung in zylindrischer Ausführungsform;
- Figur 2: die Schlauchtrommelanordnung aus Figur 1 in einer Seitenansicht;
- Figur 3: eine weitere Variante einer erfindungsgemäßen Schlauchtrommelanordnung Ausführungsform (spiralförmig gewickelt);
- Figur 4: die Schlauchtrommelanordnung aus Figur 3 in einer Seitenansicht;
- Figur 5: den Ausschnitt A aus der Figur 4 und
- Figur 6: den Ausschnitt B aus Figur 5.

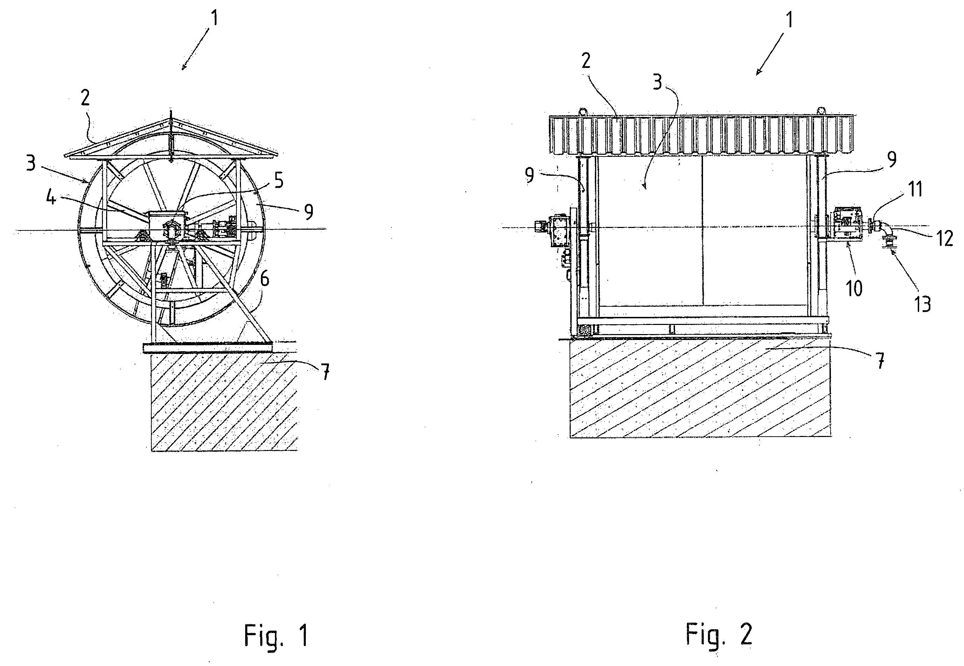

Die Figur 1 zeigt eine erfindungsgemäße Schlauchtrommelanordnung 1 in zylindrisch wickelnder Ausführungsform. Schlauchtrommelanordnungen 1 sind den verschiedensten Witterungen, wie Regen, Schnee oder Sonnenstrahlung, ausgesetzt. Daher weist die hier gezeigte Schlauchtrommelanordnung 1 eine Bedachung 2 auf. Der Trommelkörper 3 ist über Speichen 4 mit seiner drehbar gelagerten Trommelachse 5 verbunden. Die Trommelachse 5 ist drehbar in einem Trägergerüst 6 gelagert. Die in Figur 1 gezeigte Schlauchtrommelanordnung 1 ist mit ihrem Trägergerüst 6 oberhalb eines Bodens 7 angeordnet.

In der Figur 2 wird die erfindungsgemäße Schlauchtrommelanordnung 1 aus Figur 1 in einer Seitenansicht gezeigt. Im mittleren Teil des Trommelkörpers 3 wird ein Schlauch 8 wickelnd aufgenommen. Randseitig erfolgt eine Begrenzung durch Begrenzungsräder 9. In der Bildebene rechts sind an der Trommelachse 5 des Trommelkörpers 3 ein Gehäuse 10 und ein Rohrdrehgelenk 12 mit einer Drehdurchführung 11 angeordnet. Das Rohrdrehgelenk 12 ist mit einem Einspeisepunkt 13 verbunden.

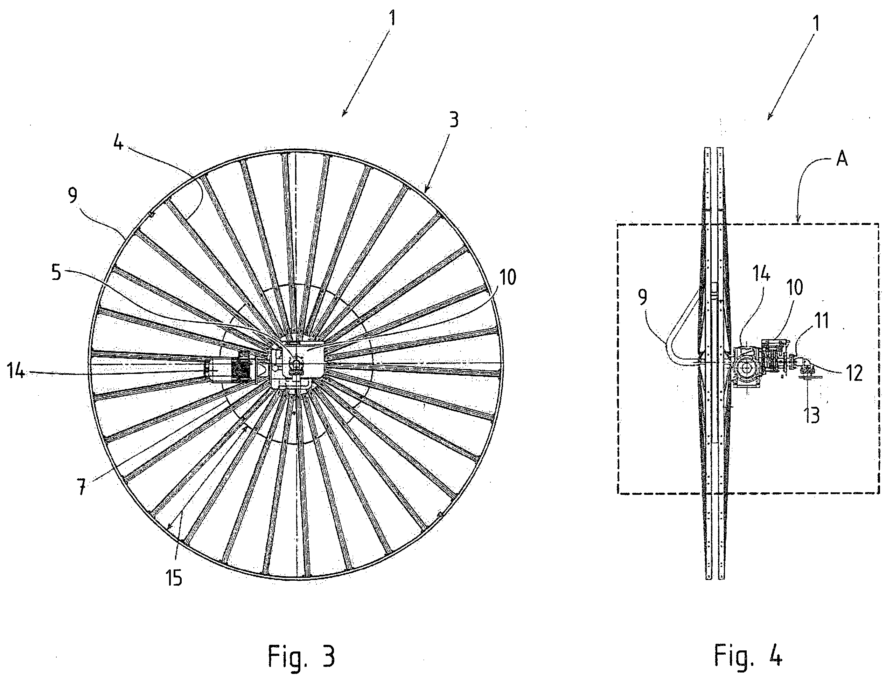

Figur 3 zeigt eine alternative erfindungsgemäße Schlauchtrommelanordnung 1 in spiralig wickelnder Ausführungsform. Die bisher eingeführten Bezugszeichen werden für funktionsgleiche Komponenten nachfolgend auch zur Erläuterung der Figuren 3 bis 6 verwendet.

In der Schlauchtrommelanordnung 1, 3, 4 ist in der Bildebene links von der Trommelachse 5 eine Antriebseinheit 14 und in der Mitte wieder ein Gehäuse 10 zu sehen. Der erste die Trommelachse 5 umgebende Kreis stellt den Boden 7 des den Schlauch 8 aufnehmenden Bereichs 15 dar. Die Trommelachse 5 ist wieder über Speichen 4 mit Begrenzungsrädern 9 verbunden.

In der Figur 4 ist die erfindungsgemäße Schlauchtrommelanordnung 1 aus Figur 3 in einer Seitenansicht zu sehen. In der Bildebene links ist ein Schlauchabschnitt gezeigt. In der Bildebene rechts sind die Antriebseinheit 14 sowie das Gehäuse 10 mit Drehdurchführung 11 und Rohrdrehgelenk 12 zu sehen.

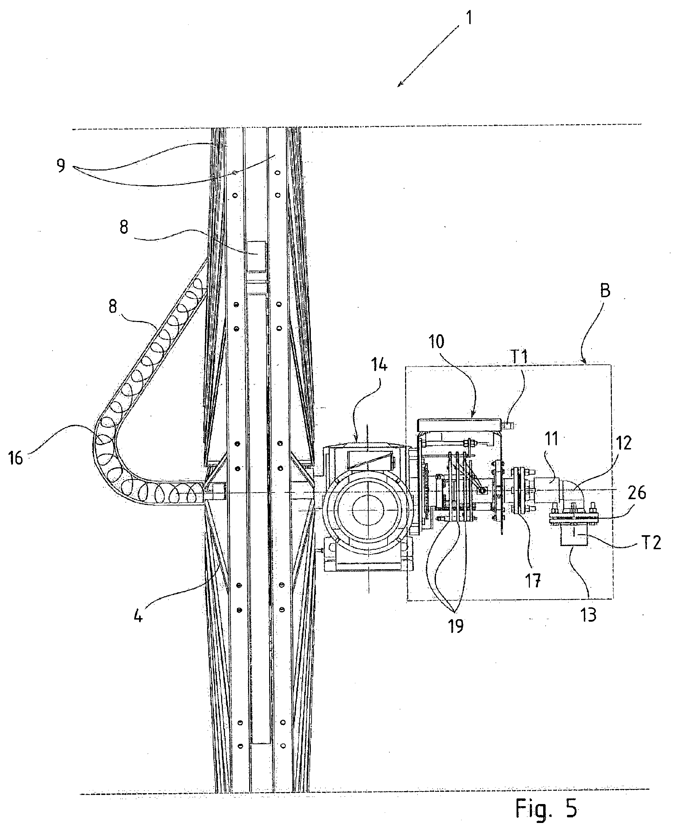

Die Figur 5 zeigt einen vergrößerten Ausschnitt der Schlauchtrommelanordnung 1 aus Figur 4. In der Bildebene links ist der erfindungsgemäße Schlauch 8 mit dem darin befindlichen Heizmittel 16 zu sehen. Das Heizmittel 16 ist wendelförmig ausgeführt.

Auf der gegenüberliegenden Seite, in der Bildebene rechts vom Trommelkörper 3, befindet sich die Antriebseinheit 14, an welche direkt das Gehäuse 10 für die Schleifringe angrenzt. Die Trommelachse 5 ist über eine Flanschverbindung 17 mit dem Rohrdrehgelenk 12 verbunden. Das Rohrdrehgelenkt 12 ist mit dem nicht näher dargestellten, feststehenden, d. h. nicht rotierenden, Bereich, von welchem die Einspeisung des zu transportierenden Mediums ausgeht, über eine Flanschverbindung 26 verbunden.

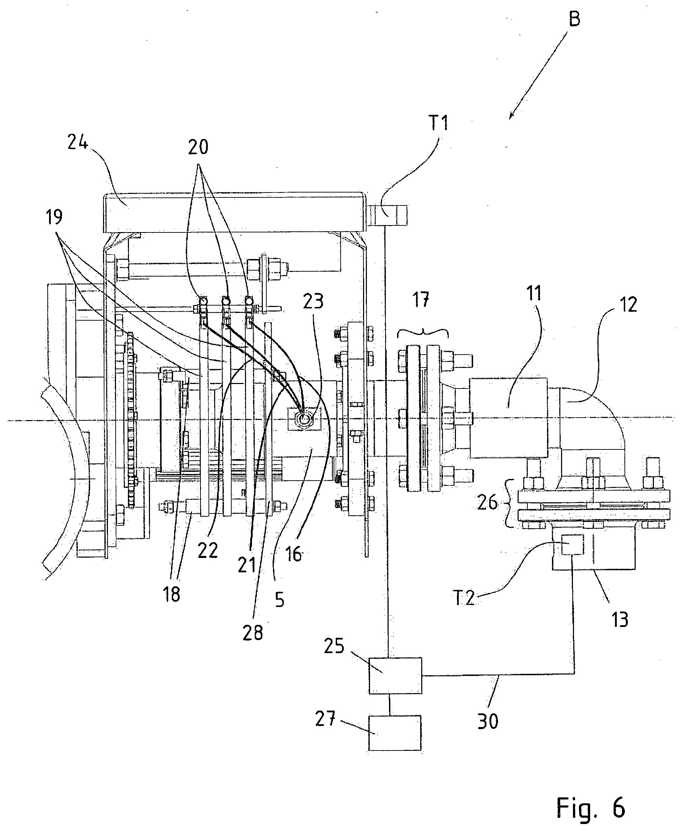

Die Figur 6 zeigt den Ausschnitt B der Figur 5 in vergrößerter Darstellungsweise. In der Figur 6 sind die Schleifringe 19 mit Kohlebürsten 20, welche den elektrischen Kontakt zu den Schleifringen 19, also dem rotierenden Teil, herstellen, gezeigt. Die Schleifringe 19 werden über mehrere umfangsseitig der als Hohlrohr ausgeführten Trommelachse 5 angeordnete Halter 18 gehalten und zugleich gegeneinander isoliert. Die Halter 18 sind mit einem Haltering 28 verbunden, der wiederum an der Trommelachse 5 fixiert ist.

Ein nicht dargestelltes Zugseil, an welchem das Heizmittel 16 sowie ein Rücklauf 21 und ein Schutzleiter 22 gekoppelt sind, ist innen an der Trommelachse 5 fixiert. Das Heizmittel 16, der Rücklauf 21 und der Schutzleiter 22 werden durch eine dichtende Verschraubung 23, welche an der Trommelachse 5 angeordnet ist, mit den entsprechenden Schleifringen 19 verbunden. Die gesamte Schleifringanordnung 29 ist in dem Gehäuse 10 witterungsgeschützt untergebracht.

An einem beweglichen Deckel 24 des Gehäuses 10 ist eine Temperaturmesseinrichtung T1 angeordnet, welche die Außentemperatur misst. Die Temperaturmesseinrichtung T1 ist mit einer Auswerteeinheit 25 zur Datenübertragung verbunden.

Eine weitere Temperaturmesseinrichtung T2 ist in der Nähe einer unteren Flanschverbindung 26 des Rohrdrehgelenks 12 angeordnet. Durch die Temperaturmesseinrichtung T2 wird die Temperatur der im Schlauch 8 transportierten Fluide gemessen. Die Information wird über eine Datenleitung 30 an die Auswerteeinheit 25 geteitet. Die Auswerteeinheit 25 ist mit einer Steuereinheit 27 verbunden, welche das Ein- und Ausschalten des Heizmittels 17 in Abhängigkeit von den gemessenen Temperaturen steuert bzw. regelt.

### Bezugszeichen:

1 - Schlauchtrommelanordnung
2 - Bedachung
3 - Trommelkörper
4 - Speichen
5 - Trommelachse
6 - Trägergerüst
7 - Boden
8 - Schlauch
9 - Begrenzungsräder
10- Gehäuse
11 - Drehdurchführung
12- Rohrdrehgelenk
13- Einspeisepunkt
14- Antriebseinheit
15 - Bereich
16- Heizmittel
17- Flanschverbindung
18- Halter
19- Schleifring
20 - Kohlebürsten
21 - Rücklauf
22 - Schutzleiter
23 - Verschraubung
24 - Deckel
25 - Auswerteeinheit
26 - Flanschverbindung
27 - Steuereinheit
28 - Haltering
29 - Schleifringanordnung
30 - Datenleitung

A - Ausschnitt
B - Ausschnitt
T1 - Temperaturmesseinrichtung Außentemperatur
T2 - Temperaturmesseinrichtung Innentemperatur

## Patentansprüche

1. Schlauchtrommelanordnung mit folgenden Merkmalen:
- Ein Trommelkörper (3) ist um seine Trommelachse (5) drehbar gelagert und ist dafür vorgesehen, einen Schlauch (8) wickelnd aufzunehmen;
- Die Trommelachse (5) ist als Fluidleitung ausgebildet, an welche der aufzuwickelnde Schlauch (8) angeschlossen ist und welche mit einer Drehdurchführung (11) versehen ist, welche die drehbare Trommelachse (5) mit einer nicht drehbaren Zuleitung verbindet,
welche durch folgende Merkmale gekennzeichnet ist:
- In dem wickelnd aufzunehmenden Schlauch (8) ist ein elektrisches Heizmittel (16) angeordnet;
- Zwischen der Drehdurchführung (11) und dem Trommelkörper (3) ist eine Schleifringanordnung (29) angeordnet, mittels welcher elektrische Energie in das Heizmittel (16) einspeisbar ist.

2. Schlauchtrommelanordnung nach Anspruch 1, **dadurch gekennzeichnet, dass** das Heizmittel (16) wendelförmig innerhalb des Schlauches (8) verläuft.

3. Schlauchtrommelanordnung nach Anspruch 1, **dadurch gekennzeichnet, dass** eine Temperaturmesseinrichtung (T2) vorgesehen ist zur Messung der Temperatur eines den Schlauch (8) durchströmenden Fluids.

4. Schlauchtrommelanordnung nach Anspruch 3, **dadurch gekennzeichnet, dass** die Temperaturmesseinrichtung (T2) eine Datenleitung (30) umfasst, über welche ein Messsignal einer Auswerteeinheit (25) zugeleitet wird.

5. Schlauchtrommelanordnung nach einem der Ansprüche 1 bis 4, **dadurch gekennzeichnet, dass** außerhalb des Schlauches (8) eine weitere Temperaturmesseinrichtung (T1) angeordnet ist, die mit einer Auswerteeinheit (25) verbunden ist.

6. Schlauchtrommelanordnung nach einem der Ansprüche 4 oder 5, **dadurch gekennzeichnet, dass** die Auswerteeinheit (25) mit einer Steuereinheit (27) verbunden ist, welche dafür vorgesehen ist, bei Unterschreiten einer unteren Temperatur im Schlauch (8) und/oder der Umgebungstemperatur die Einspeisung elektrischer Energie in die Heizmittel (16) freizugeben und bei Überschreiten einer oberen Temperatur die Einspeisung zu beenden.

7. Verfahren zum Betreiben einer Schlauchtrommelanordnung (1) gemäß einem der Ansprüche 3 bis 6, bei welchem ein elektrisches Heizmittel (16) angeschaltet wird, wenn die Temperaturmesseinrichtung (T2) im Schlauch (8) das Unterschreiten einer unteren Temperatur misst.

8. Verfahren nach Anspruch 7, **dadurch gekennzeichnet, dass** das Heizmittel (16) von der Steuereinheit (27) abgeschaltet wird, sobald eine obere Temperatur im Schlauch (8) überschritten wird.

9. Verfahren nach Anspruch 8, **dadurch gekennzeichnet, dass** das Ein- und Ausschalten des Heizmittels (16) in Abhängigkeit von der Temperatur außerhalb des Schlauches (8) und innerhalb des Schlauches (8) erfolgt.

## Claims

1. Hose reel arrangement having the following features:
- a reel body (3) is mounted to be rotatable about its reel axis (5) and is provided for accommodating a hose (8) wound thereon;
- the reel axis (5) is configured as a fluid pipe to which the hose (8) that is to be wound up is connected, and which is provided with a rotary feedthrough (11) which connects the rotatable reel axis (5) to a non-rotatable supply pipe,
said arrangement being **characterised by** the following features:
- electric heating means (16) are arranged in the hose (8) that is to be accommodated in a wound position;
- between the rotary feedthrough(11) and the reel body (3) is arranged a slip ring arrangement (29) by means of which electrical energy can be fed into the heating means (16).

2. Hose reel arrangement according to claim 1, **characterised in that** the heating means (16) extends helically inside the hose (8).

3. Hose reel arrangement according to claim 1, **characterised in that** a temperature measuring device (T2) is provided, for measuring the temperature of a fluid flowing through the hose (8).

4. Hose reel arrangement according to claim 3, **characterised in that** the temperature measuring device (T2) comprises a data lead (30) through which a measuring signal is supplied to an evaluating unit (25).

5. Hose reel arrangement according to one of claims 1 to 4, **characterised in that** outside the hose (8) is arranged another temperature measuring device (T1) which is connected to an evaluating unit (25).

6. Hose reel arrangement according to one of claims 4 or 5, **characterised in that** the evaluating unit (25) is connected to a control unit (27) which is provided in order to release the supply of electrical energy into the heating means (16) in the event of the temperature in the hose (8) and/or the ambient temperature falling below a lower threshold, and to terminate the supply when an upper temperature is exceeded.

7. Method for operating a hose reel arrangement (1) according to one of claims 3 to 6, wherein an electrical heating means (16) is switched on when the temperature measuring device (T2) in the hose (8) detects that the temperature has fallen below a lower threshold.

8. Method according to claim 7, **characterised in that** the heating means (16) is switched off by the control unit (27) as soon as an upper temperature is exceeded in the hose (8).

9. Method according to claim 8, **characterised in that** the switching on and off of the heating means (16) is carried out as a function of the temperature outside the hose (8) and inside the hose (8).

## Revendications

1. Aménagement de tambour pour tuyau ayant les caractéristiques suivantes :
- un corps de tambour (3) est monté à rotation autour de son axe (5) et est destiné à recevoir un tuyau (8) par enroulement ;
- l'axe (5) du tambour est conçu en conduite de fluide à laquelle le tuyau à enrouler (8) est raccordé et qui est pourvue d'une structure rotative (11) qui relie l'axe rotatif (5) du tambour avec une conduite non rotative,
qui est **caractérisé par** les caractéristiques suivantes :
- dans le tuyau (8) à recevoir par enroulement est aménagé un moyen de chauffage électrique (16) ;
- entre la structure rotative (11) et le corps (3) du tambour est situé un aménagement de bagues collectrices (29) au moyen duquel de l'énergie électrique peut être fournie au moyen de chauffage (16) .

2. Aménagement de tambour pour tuyau selon la revendication 1, **caractérisé en ce que** le moyen de chauffage (16) s'étend à l'intérieur du tuyau (8) en forme d'hélice.

3. Aménagement de tambour pour tuyau selon la revendication 1, **caractérisé en ce qu'**il est prévu un dispositif de mesure de la température (T2) pour mesurer la température d'un fluide parcourant le tuyau (8).

4. Aménagement de tambour pour tuyau selon la revendication 3, **caractérisé en ce que** le dispositif de mesure de la température (T2) comprend une ligne de transmission de données (30) via laquelle un signal de mesure est envoyé à une unité d'évaluation (25).

5. Aménagement de tambour pour tuyau selon l'une quelconque des revendications 1 à 4, **caractérisé en ce qu'**à l'extérieur du tuyau (8) est aménagé un autre dispositif de mesure de la température (T1) qui est raccordé à une unité d'évaluation (25).

6. Aménagement de tambour pour tuyau selon l'une quelconque des revendications 4 ou 5, **caractérisé en ce que** l'unité d'évaluation (25) est reliée à une unité de commande (27) qui est prévue, en cas de passage en dessous d'une température inférieure dans le tuyau (8) et/ou de la température environnante, pour autoriser la fourniture d'énergie électrique au moyen de chauffage (16) et mettre fin à la fourniture dans le cas d'un dépassement d'une température supérieure.

7. Procédé de commande d'un aménagement de tambour pour tuyau (1) selon l'une quelconque des revendications 3 à 6, dans lequel est commuté un moyen de chauffage électrique (16) lorsque le dispositif de mesure de la température (T2) dans le tuyau (8) mesure le passage en dessous d'une température inférieure.

8. Procédé selon la revendication 7, **caractérisé en ce que** le moyen de chauffage (16) est déconnecté de l'unité de commande (27) aussitôt qu'une température supérieure est dépassée dans le tuyau (8) .

9. Procédé selon la revendication 8, **caractérisé en ce que** la connexion et la déconnexion du moyen de chauffage (16) se font en fonction de la température à l'extérieur du tuyau (8) et à l'intérieur du tuyau (8).
